# EUROPEAN PATENT APPLICATION

(11) **EP 4 818 662 A1**
(43) Date of publication of application: **07.10.2026**
(21) Application number: 26169016.8
(22) Date of filing: 30.03.2026
(51) Int. Cl.: G01L 19/00, G01K 1/14, G01L 9/00

(54) **TEMPERATURE-PRESSURE SENSOR FOR NEW ENERGY VEHICLE**

(30) Priority: 14.11.2025 CN 202511668072
(71) Applicant: Temb Intelligent Technology (Shandong) Co., Ltd., Jining City, Shandong 273100 (CN)
(72) Inventor: LYU, Yawei, Qufu City, Jining City, Shandong, 273100 (CN); DONG, Shujie, Qufu City, Jining City, Shandong, 273100 (CN); CHENG, Qin, Qufu City, Jining City, Shandong, 273100 (CN); ZENG, Qi, Qufu City, Jining City, Shandong, 273100 (CN); DAI, Chuanxi, Qufu City, Jining City, Shandong, 273100 (CN); JING, Zheng, Qufu City, Jining City, Shandong, 273100 (CN)
(74) Representative: Plavsa, Olga

(57) **Abstract**

A temperature-pressure sensor for new energy vehicle includes a plug assembly, a housing, and a protective sleeve. The housing includes a support base, a circuit board, a temperature sensing probe, and a pressure sensing element. The protective sleeve is located onto the lower side waist of the support base. The temperature sensing probe is located inside the protective sleeve and connected to the circuit board. The top of the support base is provided with a square groove. The pressure sensing element is located at the bottom of the circuit board and is connected to the circuit board. A pressure transmission channel is further provided within the housing, which includes a gap portion and a specially shaped channel. A circular pressure groove within the square groove combines with the pressure sensing element to form a pressure cavity with an eccentric design.

## Description

### TECHNICAL FIELD

The present disclosure relates to the technical field of sensor devices, in particular to a temperature-pressure sensor for new energy vehicle.

### BACKGROUND

With the continuous evolution of automotive technology, intelligence, energy conservation and emission reduction have become the main trends in development. Concurrently, the increasing integration and complexity of automotive electronic control systems have led to the need for integrated temperature-pressure sensors to collect both pressure and temperature data.

In the prior art, a temperature-pressure sensor includes a plug assembly and a housing which are coaxially connected. A temperature probe, a pressure sensing element, a conditioning circuit, and a support base are coaxially connected within the housing. The conditioning circuit processes and provides feedback on temperature data collected by the temperature probe and pressure data collected by the pressure sensing element. The pressure sensing element is arranged on the support base, and the support base is provided with a through-hole to allow a medium to flow in for pressure sensing by the pressure sensing element, ultimately collecting pressure data of the medium.

To achieve a compact structure and sealing reliability, many components in the temperature-pressure sensor are coaxially connected. Due to installation interference, the position of the medium inlet channel on the support base is very limited, resulting in a small flow area of the medium inlet channel, that is, the medium inlet surface area is very limited, which seriously restricts the response speed of the medium pressure measurement.

### SUMMARY

An embodiment of the present application provides a temperature-pressure sensor for new energy vehicle. By eccentrically designing a pressure cavity on a support base along the length direction of a square groove, and providing a specially shaped channel for the pressure medium to flow in at the deviated portion, a larger medium inlet surface area can be ensured, thereby greatly improving the response speed of the medium pressure measurement.

An embodiment of the present application provides a temperature-pressure sensor for new energy vehicle, including a plug assembly, a housing, and a protective sleeve sequentially connected coaxially from top to bottom. A support base, a circuit board, a temperature sensing probe, and a pressure sensing element are coaxially extended and fixed within the housing. The plug assembly is connected to the circuit board via pins. The protective sleeve is sealingly sleeved onto a lower side waist of the support base. The temperature sensing probe is located within the protective sleeve and is electrically connected to the circuit board via temperature sensing pin needles. The top portion of the support base is provided with a square groove adapted to accommodate and fix the pressure sensing element and the circuit board. The pressure sensing element is fixed on the bottom of the circuit board and is electrically connected to the circuit board. A pressure transmission channel is further provided within the housing for guiding the medium from the bottom of the housing to the surface of the pressure sensing element.

The pressure transmission channel includes a gap portion and an internal portion. The gap portion is formed by the protective sleeve and the housing and the internal portion is a specially shaped channel formed on the support base. A circular pressure groove is provided within the square groove. A circular sealing ring is provided along the sidewall of the circular pressure groove. The circular pressure groove cooperates with the pressure sensing element to form a pressure cavity.

In an axial direction, the pressure cavity is eccentrically designed relative to the housing. The pressure cavity deviates along a length direction of the square groove, forming a medium introduction region at the deviated portion. The specially shaped channel is provided in the medium introduction region and communicates with the pressure cavity and the gap portion respectively in the axial direction.

In a possible implementation, the specially shaped channel is a sector-shaped channel. A side of the specially shaped channel proximate to the central axis is planar. In the axial direction, the planar side is proximate to the protective sleeve.

A side of the specially shaped channel proximate to the circular sealing ring is curved. The planar side and the curved side transition via a circular arc.

In a possible implementation, the bottom opening of the specially shaped channel has a flared structure that is smaller at the top and larger at the bottom.

In a possible implementation, the housing is provided with a housing cavity. The bottom wall of the housing cavity is provided with a profiled anti-rotation groove. The top end of the protective sleeve is provided with an anti-rotation stretched plate that cooperates with the profiled anti-rotation groove. The support base is symmetrically provided with crimping protrusions on both sides of the lower side waist, so that when the crimping protrusions are crimped onto the bottom of the anti-rotation stretched plate, they undergo crimping deformation.

In a possible implementation, the profiled anti-rotation groove is a square groove, and corners of the square groove are all rounded.

In a possible implementation, the pressure sensing element is a ceramic capacitor. A signal processing chip on the circuit board excites the ceramic capacitor with a square wave signal at a frequency of 38.4 to 76.8 kHz to obtain a capacitance value C of the pressure sensing element.

The signal processing chip on the circuit board processes the capacitance value C sequentially according to the following steps:
S10, capacitance zero adjustment is input;
S20, C/V conversion, the zero-adjusted input capacitance is converted into an analog voltage signal;
S30, ADC conversion, the consistency of data format and units during the calculation are calibrated;
S40, MCU processing, N different standard voltages are applied to the sensor at M temperature points respectively, the circuit board collects the capacitance values C under the N different standard pressures and stores them in an MCU register, further fits and processes the information stored in the register with a target of achieving a V-P linear relationship required by the vehicle, ultimately achieving a consistent V-P linear output, where M is 2 or 3, and 2≤N≤4;
S50, DAC calibration, errors of the analog output module are eliminated.

In a possible implementation, the ceramic capacitor sequentially includes a square base, a base electrode, a diaphragm electrode and a diaphragm. The square base and the base electrode are sintered to form a first sub-assembly. The diaphragm electrode and the diaphragm are sintered to form a second sub-assembly. The first sub-assembly and the second sub-assembly are sintered and connected via a patterned glass adhesive. Glass rods are filled in the glass adhesive, and a diameter of the glass rods is the distance between the first sub-assembly and the second sub-assembly.

In a possible implementation, the temperature-pressure sensor for new energy vehicle further includes a mounting seat. The housing is provided with a housing waist corresponding to the lower side waist. The housing waist is threadedly connected to the mounting seat. A bottom of the mounting seat is provided with a medium flow channel and a detection flow channel which are vertically communicated. The protective sleeve is located within the detection flow channel. A top end of the housing waist is provided with a sealing groove on an outer circumference. An external sealing ring is provided in the sealing groove, and the external sealing ring protrudes from the sealing groove.

In a possible implementation, the support base is a plastic base. The protective sleeve is a stainless steel sleeve. A lower interior portion of the protective sleeve is filled with a thermally conductive medium. The temperature sensing probe is located within the thermally conductive medium.

In a possible implementation, the temperature sensing probe is a thermistor. The temperature sensing probe forms a resistor head via epoxy encapsulation or glass encapsulation.

Advantageous effects: Compared with the prior art, the temperature-pressure sensor for new energy vehicle provided by the present application designs the pressure transmission channel to include a gap portion and an internal portion and the internal portion is provided in the deviated portion of the pressure cavity eccentrically designed on the support base relative to the housing. This eccentric design not only avoids installation interference among various internal components in the sensor and does not affect the overall structural compactness and sealing reliability among various components, but also maximizes the design space for the specially shaped channel within a limited spatial range. Thus, the specially shaped channel can effectively increase the pressure medium inlet surface area, thereby greatly improving the response speed of the medium pressure measurement.

These and other objectives, features, and advantages of the present disclosure will be fully demonstrated by the following detailed description.

### BRIEF DESCRIPTION OF THE DRAWINGS

FIG. 1 shows a schematic diagram of the three-dimensional structure of the temperature-pressure sensor for new energy vehicle of the present application.
FIG. 2 shows a schematic diagram of the cross-sectional structure of the temperature-pressure sensor for new energy vehicle of the present application.
FIG. 3 shows a partial schematic diagram of the cross-sectional structure of the temperature-pressure sensor for new energy vehicle of the present application from another perspective.
FIG. 4 shows a schematic structural of the cooperation of the circuit board with the pressure sensing element and the pins of the present application.

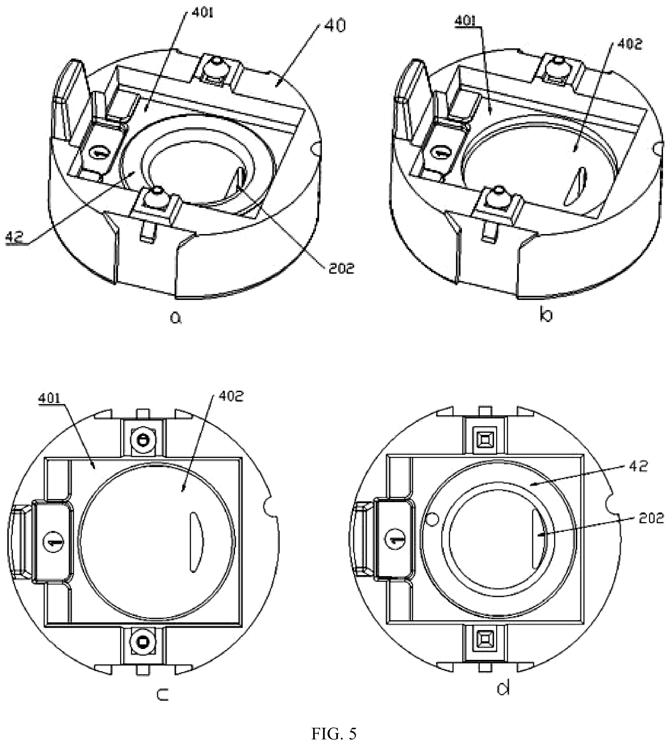

FIG. 5 shows a schematic structural of the support base with the circular sealing ring and without the circular sealing ring of the present application, where FIG. 5a is schematic diagram of the three-dimensional structure of the support base with the circular sealing ring, FIG. 5b is a schematic diagram of the three-dimensional structure of the support base without the circular sealing ring, FIG. 5c is a top view structural schematic diagram of the support base without the circular sealing ring, and FIG. 5d is a top view structural schematic diagram of the support base with the circular sealing ring.
FIG. 6 shows an exploded structural schematic diagram of the cooperation of the support base and the protective sleeve of the present application.
FIG. 7 shows a schematic diagram of the cross-sectional structure of the cooperation of the housing and the protective sleeve of the present application.
FIG. 8 shows an exploded structural schematic diagram of the pressure sensing element of the present application.
FIG. 9 shows a schematic structural of the cooperation of the housing and the mounting seat of the present application.

Reference signs: 10-plug assembly, 11-pin, 12-snap structure, 20-housing, 201-gap portion, 202-specially shaped channel, 203-housing cavity, 204-profiled anti-rotation groove, 21-housing waist, 22-external sealing ring, 30-protective sleeve, 31-anti-rotation stretched plate, 32-thermally conductive medium, 40-support base, 401-square groove, 402-circular pressure groove, 41-lower side waist, 42-circular sealing ring, 43-crimping protrusion, α-offset distance, 50-circuit board, 60-temperature sensing probe, 61-pin needle, 62-solder pad, 70-pressure sensing element, 71-square base, 72-base electrode, 73-glass adhesive, 74-diaphragm electrode, 75-diaphragm, 80-mounting seat, 801-medium flow channel, 802-detection flow channel.

### DETAILED DESCRIPTION OF THE EMBODIMENTS

The following description is provided to disclose the present disclosure to enable those skilled in the art to implement the present disclosure. The preferred embodiments described below are only examples, and those skilled in the art can conceive of other obvious variations. The basic principles defined in the following description can be applied to other embodiments, variations, improvements, equivalents, and other technical solutions without departing from the spirit and scope of the present disclosure.

Those skilled in the art should understand that in the disclosure of the specification, terms such as "longitudinal", "lateral", "upper", "lower", "front", "rear", "left", "right", "vertical", "horizontal", "top", "bottom", "inner", "outer" indicate orientations or positional relationships based on those shown in the drawings, which are only for convenience in describing the present disclosure and simplifying the description, and do not indicate or imply that the device or element referred to must have a specific orientation, be constructed, or operate in a specific orientation. Therefore, the above terms should not be construed as limiting the present disclosure.

It should be understood that the term "a" should be interpreted as "at least one" or "one or more". That is, in one embodiment, the number of an element may be one, while in another embodiment, the number of the element may be multiple. The term "a" should not be construed as a limitation on quantity.

In common design solutions for temperature-pressure sensors in the market, pressure measurement solutions include MEMS, ceramic resistor, ceramic capacitor, glass micro-fusion, sputtered thin film, etc. The MEMS solution cannot meet the requirements of 2 times overload pressure and 3 times burst pressure or higher. The ceramic resistor solution has large temperature drift, poor consistency, and difficulty in achieving absolute pressure measurement, making low-cost mass production difficult. Glass micro-fusion and sputtered thin film are insensitive to low pressure, have complex processes, cannot achieve absolute pressure measurement, and are not preferred solutions, especially in the medium to low pressure range (<10 MPa). Ceramic capacitors, due to their corrosion resistance, low cost, and excellent overload and burst pressure resistance, have become the preferred solution for medium to low pressure measurement. However, the response speed of ceramic capacitors heavily depends on the medium inlet surface area, and the temperature-pressure sensors must prioritize compact structural design and sealing reliability, it is challenging to increase the medium inlet surface area within a limited space to ensure response speed.

Currently, most temperature measurement solutions in the industry choose NTC thermistors as temperature sensing elements. Compared to the PT platinum resistor solution, NTC resistors are "high-quality and inexpensive." However, because the measurement medium may contain metal foreign objects or be conductive, this solution is prone to generating thermistors and causing pin short circuits. Additionally, thermistors encapsulated with epoxy or glass are susceptible to damage from corrosive media such as oils. Currently, a common solution in the industry involves injection molding the thermistor with a protective shell. The advantage of this solution is that it can seal and protect the thermistor and easily meet the sealing requirements of the temperature-pressure sensor assembly. However, it also introduces a problem: the response time of the temperature sensor becomes very long. For example, a thermistor t63 encapsulated in plastic may reach 15 seconds, making it difficult to meet the requirements of vehicle systems for short measurement response time. How to protect the thermistor from external damage while being compatible with measurements in corrosive media and conductive media has become a new challenge for temperature-pressure sensors. Based on this, embodiments of the present disclosure provide a temperature-pressure sensor for a new energy vehicle to at least partially address the shortcomings of the related art solutions.

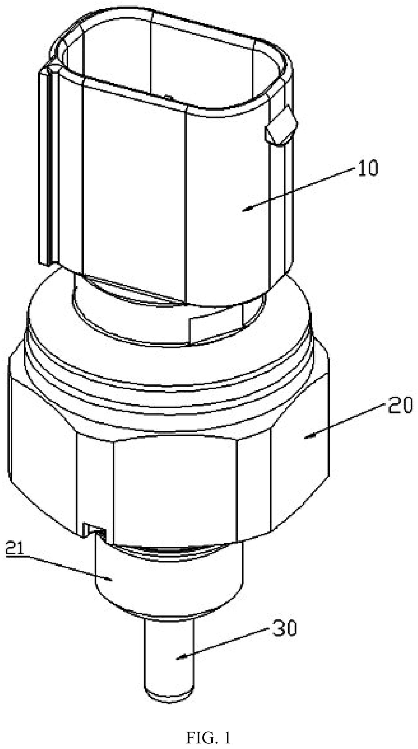

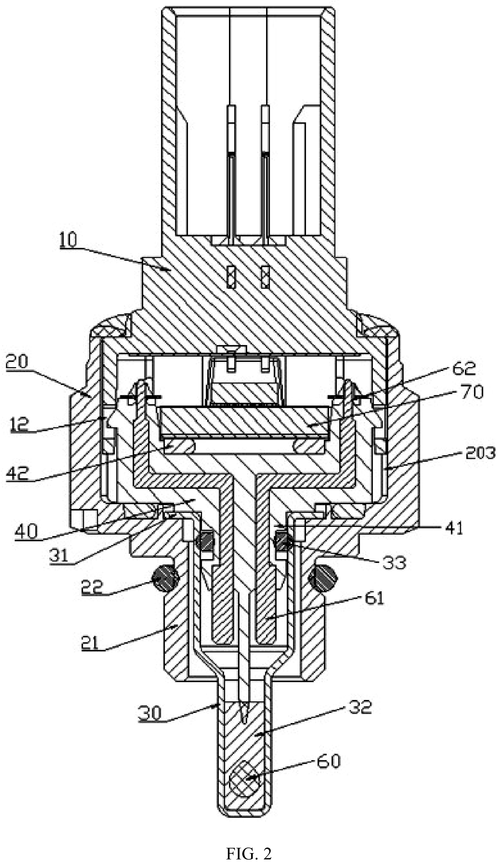

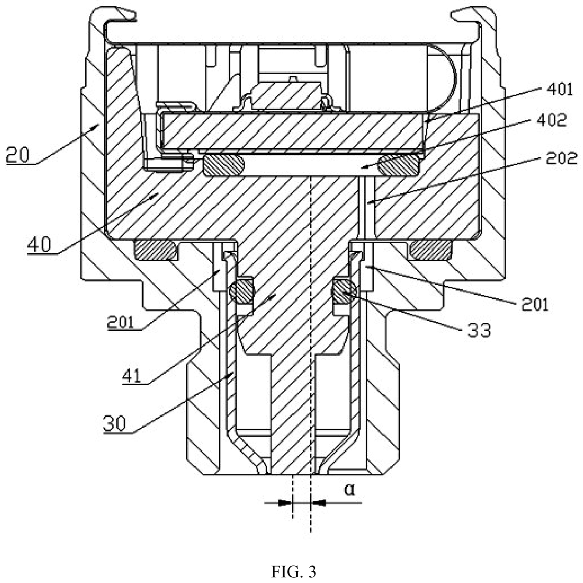

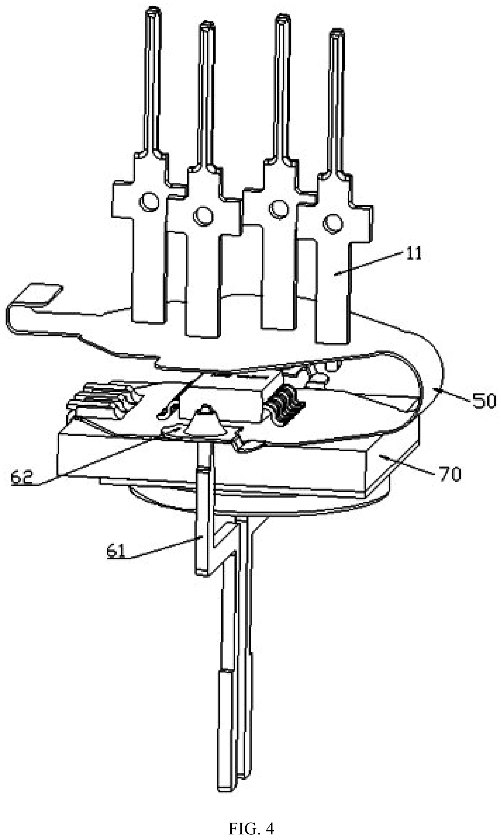

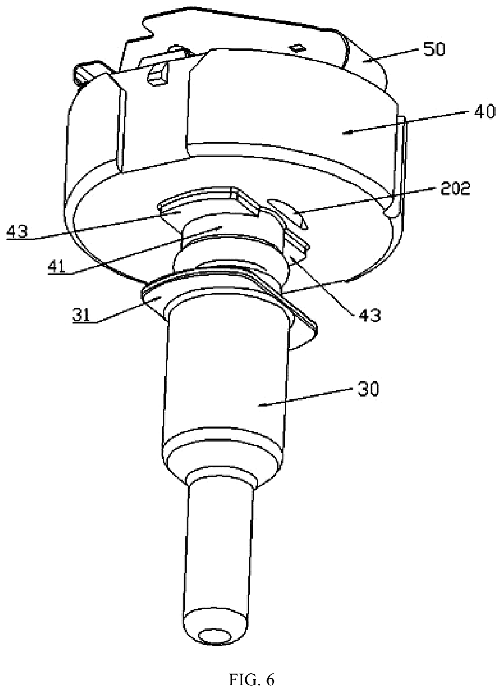

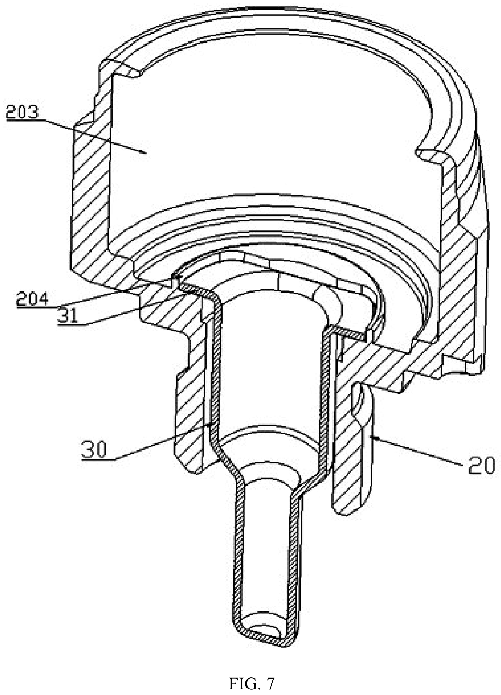

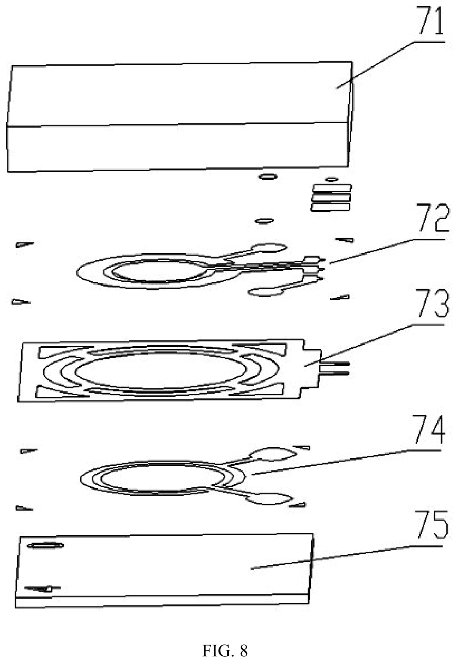

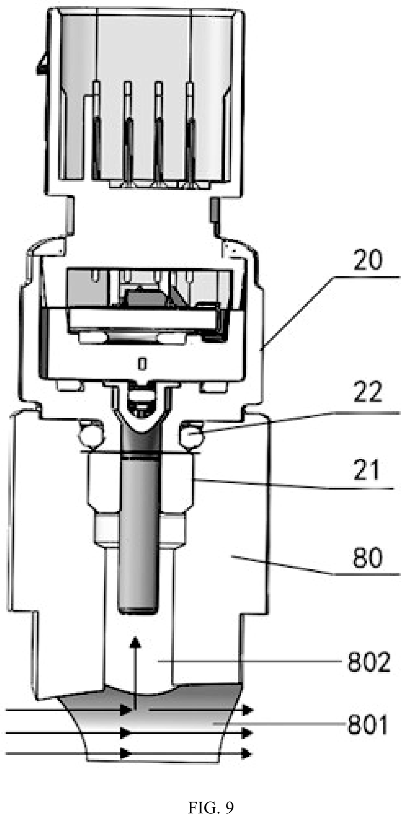

Referring to FIG. 1 to FIG. 9, an embodiment of the present application provides a temperature-pressure sensor for a new energy vehicle, including a plug assembly 10, a housing 20, and a protective sleeve 30 sequentially connected coaxially from top to bottom. A support base 40, a circuit board 50, a temperature sensing probe 60, and a pressure sensing element 70 are coaxially extended and fixed within the housing 20. The plug assembly 10 is connected to the circuit board 50 via pins 11. The plug assembly 10 and the support base 40 are correspondingly provided with snap structures 12 symmetrically distributed in the circumferential direction, allowing the two components to engage and form an assembly, facilitating process flow and subsequent operations. The protective sleeve 30 is sealingly sleeved onto a lower side waist 41 of the support base 40. The temperature sensing probe 60 is located within the protective sleeve 30 and is electrically connected to the circuit board 50 via temperature sensing pin needles 61 for transmitting collected temperature data to the circuit board 50. The temperature sensing pin needles 61 are connected to the circuit board 50 via a solder pad 62. A top portion of the support base 40 is provided with a square groove 401 adapted to accommodate and fix the pressure sensing element 70 and the circuit board 50 (i.e., the pressure sensing element 70 is also square-shaped). The pressure sensing element 70 is fixed on a bottom of the circuit board 50 and is electrically connected to the circuit board 50. A pressure transmission channel is further provided within the housing 20 for guiding the medium from the bottom of the housing 20 to the surface of the pressure sensing element 70 for medium pressure measurement.

The pressure transmission channel includes a gap portion 201 and an internal portion. The gap portion 201 is formed by the protective sleeve 30 and the housing 20, and the internal portion is a specially shaped channel 202 formed on the support base 40. A circular pressure groove 402 is provided within the square groove 401. A circular sealing ring 42 is provided along the sidewall of the circular pressure groove 402 to prevent the medium from bypassing the pressure sensing element 70 and corroding and damaging the circuit board 50. The circular pressure groove 402 cooperates with the pressure sensing element 70 to form a pressure cavity.

In an axial direction, the pressure cavity is eccentrically designed relative to the housing 20. The pressure cavity deviates along a length direction of the square groove 401, forming a medium introduction region at the deviated portion, wherein the offset distance is α, which can be 1-3 mm and can be adjusted according to the actual environment. The specially shaped channel 202 is provided in the medium introduction region and communicates with the pressure cavity and the gap portion 201 respectively in the axial direction.

Thus, the temperature-pressure sensor for a new energy vehicle provided by the present application, on the one hand, ensures the overall structural compactness of the sensor and the sealing reliability among various components through the coaxially arranged plug assembly 10, housing 20, protective sleeve 30, support base 40, circuit board 50, temperature sensing probe 60, and pressure sensing element 70, facilitating assembly and use. On the other hand, through the offset arrangement or eccentric structure design for the pressure cavity, it maximizes the design space for the specially shaped channel without affecting the advantages of compact structure and sealing performance. This allows the specially shaped channel to ensure a maximized medium inlet surface area within a limited space, thereby greatly improving the response speed of the temperature-pressure sensor in medium pressure measurement.

In one embodiment, the specially shaped channel 202 is a sector-shaped channel. A side of the specially shaped channel 202 proximate to the central axis is planar. In the axial direction, the planar side is proximate to the protective sleeve 30.

A side of the specially shaped channel 202 proximate to the circular sealing ring 42 is curved. The planar side and the curved side transition via a circular arc.

That is, the planar side and the curved side of the specially shaped channel 202 are respectively close to the two extreme positions of the deviated portion. If the planar side continues to extend in the direction of the central axis, it would be blocked by the protective sleeve 30, providing insignificant benefit in increasing the medium inlet surface area. If the curved side continues to approach the circular sealing ring 42, it might affect the sealing effect, which would be counterproductive.

The sector-shaped channel can ensure the maximized medium inlet surface area.

Specifically, compared to the circular channel: first, within a radially elongated curved space, the space occupied by the circular channel is limited. Second, for the circular channel, its cross-sectional area is πr², and its inner wall perimeter is 2πr, with a perimeter/area ratio = 2πr/πr² = 2/r. This means that for a given cross-sectional area, the perimeter of a circle is fixed. To increase the contact area, one can only increase the channel depth or the channel length, but cannot change its "inlet efficiency". Obviously, to ensure the compactness of the overall sensor structure, the axial length of the support base is fixed or limited.

Within a radially elongated curved space, the sector-shaped channel naturally occupies a larger spatial area. The cross-section of the sector-shaped channel can be viewed as a stretched or compressed circle. When developed from a three-dimensional cylindrical surface onto a two-dimensional plane, it approximates a rectangle, wherein the long side of the rectangle is the arc length of the sector, and the short side of the rectangle is the depth of the channel. The cross-sectional area of the sector-shaped channel is approximately the product of the arc length and the depth. The inner wall perimeter of the sector-shaped channel is mainly determined by the arc length and the two straight sides. Even with the same cross-sectional area (i.e., the same medium flow rate), the angle and radius of the sector itself mean that the inner wall perimeter of the sector-shaped channel is much larger than that of the circular channel. The medium contact surface area is equal to the channel cross-sectional perimeter multiplied by the channel depth. Therefore, for the same channel depth, a larger cross-sectional perimeter results in a larger total contact surface area. Clearly, by reasonably designing the angle and radius of the specially shaped channel 202 within the radially elongated curved space (i.e., within the medium introduction region), the pressure medium inlet surface area can be maximized, thereby maximizing the response speed of the medium pressure measurement. In practical application, factors such as the structural strength of the support base 40 may also be considered.

Further preferably, the bottom opening of the specially shaped channel 202 has a flared structure that is smaller at the top and larger at the bottom. This can significantly reduce the resistance of the medium flowing from the gap portion into the specially shaped channel 202, allowing the medium to pass through the specially shaped channel 202 more smoothly and steadily to act on the surface of the pressure sensing element 70, further enhancing the response speed of the pressure sensing element 70 for medium pressure measurement. The transition shape of the specially shaped channel 202 from a wide inlet to a narrow outlet helps guide the medium to flow uniformly along the specially shaped channel 202, forcing the medium to make full contact with the entire inner wall of the specially shaped channel 202, avoiding situations where the medium "short-circuits" directly at the inlet or creates eddy currents, which would leave part of the surface area idle.

In one embodiment, the housing 20 is provided with a housing cavity 203. The bottom wall of the housing cavity 203 is provided with a profiled anti-rotation groove 204. The top end of the protective sleeve 30 is provided with an anti-rotation stretched plate 31 that cooperates with the profiled anti-rotation groove 204. The support base 40 is symmetrically provided with crimping protrusions 43 on both sides of the lower side waist 41, so that when the crimping protrusions 43 are crimped onto a bottom of the anti-rotation stretched plate 31, they undergo crimping deformation. Thus, in the axial direction, the crimping engagement between the crimping protrusions 43 on the support base 40 and the anti-rotation stretched plate 31 prevents the anti-rotation stretched plate 31 from moving vertically. In the radial direction (perpendicular to the axial direction), the profiled anti-rotation groove 204 limits the anti-rotation stretched plate 31. This allows the protective sleeve 30 to be firmly fixed without affecting the overall compression amount of the sealing ring of the sensor.

In one embodiment, the profiled anti-rotation groove 204 is a square groove, and corners of the square groove are all rounded.

In one embodiment, the pressure sensing element 70 is a ceramic capacitor. A signal processing chip on the circuit board 50 excites the ceramic capacitor with a square wave signal at a frequency of 38.4 to 76.8 kHz to obtain a capacitance value C of the pressure sensing element 70.

The signal processing chip on the circuit board processes the capacitance value C sequentially according to the following steps:
S10, capacitance zero adjustment is input, the formula is Cin = C - CAPDAC, wherein Cin is the zero-adjusted capacitance, C is the capacitance value obtained by the pressure sensing element 70, and CAPDAC is an adjustable capacitor integrated within the signal processing chip on the circuit board 50, which can be initialized based on the actual measured value of C. In the prior art, CAPDAC is a fixed-value capacitor among peripheral components that needs to be arranged near the signal processing chip. Being placed outside the processing chip, displacement changes due to vibration and electromagnetic interference can cause irregular changes in the input capacitance Cin, leading to measurement deviations. The temperature-pressure sensor of the present application integrates CAPDAC inside the signal processing chip, effectively avoiding the above-mentioned issues and making medium measurement more accurate.
S20, C/V conversion, the zero-adjusted input capacitance is converted into an analog voltage signal.
S30, ADC conversion, the consistency of data format and units during the calculation are calibrated.
S40, MCU processing, N different standard voltages are applied to the sensor at M temperature points respectively, the circuit board collects the capacitance values C under the N different standard pressures and stores them in an MCU register, further fits and processes the information stored in the register with a target of achieving a V-P linear relationship required by the vehicle, ultimately achieving a consistent V-P linear output, where M is 2 or 3, and 2≤N≤4, to ensure the fitting accuracy of the collected data. The number of calibration temperature points and standard voltages can be increased or decreased according to the accuracy requirements of the operating environment of the sensor.
S50, DAC calibration, errors of the analog output module are eliminated.

The above process converts the medium pressure into an analog voltage signal recognizable by the client. To ensure stable transmission of this signal. peripheral components are used for protection against interference factors such as static electricity, large current, and high voltage in the usage environment. Peripheral components include, but are not limited to, capacitors, resistors, magnetic beads, TVS, and other devices.

In one embodiment, the ceramic capacitor sequentially includes, from top to bottom, a square base 71, a base electrode 72, a diaphragm electrode 74, and a diaphragm 75. The square base 71 and the base electrode 72 are sintered to form a first sub-assembly. The diaphragm electrode 74 and the diaphragm 75 are sintered to form a second sub-assembly. The first sub-assembly and the second sub-assembly are sintered and connected via a patterned glass adhesive 73. Glass rods are filled in the glass adhesive 73, and a diameter of the glass rods is the distance between the first sub-assembly and the second sub-assembly. The base electrode 72 and the diaphragm electrode 74 both include an inner measurement electrode and an outer protective electrode. The protective electrode may prevent sensor signal interference. In specific implementations, the annular width of the protective electrode on both the base electrode 72 and the diaphragm electrode 74 is increased to 1 to 2.5 mm. This design can accommodate measurements in polar media such as water and coolant.

Pressure measurement principle: The pressure medium sequentially passes through the gap portion 201 and the specially shaped channel 202 into the circular pressure groove 402. The pressure acts on the surface of the pressure sensing element 70. The diaphragm 75 and the diaphragm electrode 74 deform, changing the facing area between the diaphragm electrode 74 and the base electrode 72, which achieves the conversion of the pressure medium into different capacitance values of the pressure sensing element 70. The pressure sensing element 70 transmits a signal to the circuit board 50, which further corrects and processes the electrical signal. The processed signal is transmitted to an external controller via the pins 11 of the plug assembly 10, thus forming the pressure measurement.

Temperature measurement Principle: The temperature of the pressure medium directly contacts the protective sleeve 30, which conducts the medium temperature to the protective sleeve 30. The protective sleeve 30 further conducts the temperature via the thermally conductive medium 32 to the temperature sensing probe 60. The temperature sensing probe 60 then converts the temperature of the pressure medium into a resistance change. The temperature sensing probe 60 transmits the resistance signal via the temperature sensing pin needles 61 to the circuit board 50. The circuit board 50 then transmits the signal to the external controller via the pins 11 of the plug assembly 10. Since the temperature of the pressure medium varies, the resistance of the temperature sensing probe 60 varies, and the resistance signal transmitted by the sensor to the external controller also varies, thus forming the measurement of the pressure medium temperature.

In one embodiment, the temperature-pressure sensor for a new energy vehicle further includes a mounting seat 80. The housing 20 is provided with a housing waist 21 corresponding to the lower side waist 41. The housing waist 21 is threadedly connected to the mounting seat 80. A bottom of the mounting seat 80 is provided with a medium flow channel 801 and a detection flow channel 802 which are vertically communicated. The protective sleeve 30 is located within the detection flow channel 802. A top end of the housing waist 21 is provided with a sealing groove on an outer circumference. An external sealing ring 22 is provided in the sealing groove, and the external sealing ring 22 protrudes from the sealing groove. Thus, when assembling the housing 20 and the mounting seat 80, the external sealing ring 22 is compressed both axially and radially, achieving a good seal between the sensor and the mounting seat 80.

In one embodiment, the support base 40 is a plastic base. The protective sleeve 30 is a stainless steel sleeve. A lower interior portion of the protective sleeve 30 is filled with a thermally conductive medium 32. The temperature sensing probe 60 is located within the thermally conductive medium 32. In this way, throughout the heat transfer process, heat absorption loss by the support base 40 can be reduced. Additionally, the thermally conductive medium 32 allows the heat transfer form from the protective sleeve 30 to the temperature sensing probe 60 to change from thermal radiation to direct thermal conduction, enabling faster transmission of the medium temperature and achieving a temperature measurement response time within 5 seconds.

In one embodiment, the temperature sensing probe 60 is a thermistor. The temperature sensing probe 60 forms a resistor head via epoxy encapsulation or glass encapsulation. The resistor head in this solution can accommodate specifications with a diameter below 3 mm.

To ensure that the temperature sensing probe 60 can be compatible with measurements in corrosive and conductive media, a sealing ring 33 is used for radial sealing between the protective sleeve 30 and the radial sealing ring groove of the support base 40. The inner bottom surface of the protective sleeve 30 connects to the temperature sensing probe 60 via the thermally conductive medium 32, forming the entire heat transfer process: from the medium temperature to be measured to the protective sleeve 30, from the protective sleeve 30 to the thermally conductive medium 32, and from the thermally conductive medium 32 to the temperature sensing probe 60.

### Medium pressure measurement response speed Test:

### Test Method:

The time from 1 bar A to the maximum pressure output of the sensor (from T1 (sensor output at 2 bar A) to T2 (sensor output reaching 10 bar A)). Calculate 63% of T2 - T1.

The pressure response time of the temperature-pressure sensor for a new energy vehicle provided by the present application was tested using a cavitation test device and found to be 1.26 ms. Therefore, it can be determined that the temperature-pressure sensor for a new energy vehicle provided by the present application can greatly improve the response speed of the medium pressure measurement.

It should be noted that the terms "first, second" in the present application are used for descriptive purposes only, do not indicate any order, and cannot be understood as indicating or implying relative importance. These terms may be interpreted as names.

Those skilled in the art should understand that the embodiments of the present disclosure shown in the above description and drawings are only examples and do not limit the present disclosure. The advantages of the present disclosure have been completely and effectively demonstrated. The functional and structural principles of the present disclosure have been shown and described in the embodiments, and the implementation of the present disclosure may have any variations or modifications without departing from the principles.

## Claims

1. A temperature-pressure sensor for new energy vehicle, **characterized by** comprising a plug assembly (10), a housing (20), and a protective sleeve (30) sequentially connected coaxially from top to bottom; wherein a support base (40), a circuit board (50), a temperature sensing probe (60), and a pressure sensing element (70) are coaxially extended and fixed within the housing (20); wherein the plug assembly (10) is connected to the circuit board (50) via pins (11); wherein the protective sleeve (30) is sealingly sleeved onto a lower side waist (41) of the support base (40), the temperature sensing probe (60) is located within the protective sleeve (30) and is electrically connected to the circuit board (50) via temperature sensing pin needles (61); a top portion of the support base (40) is provided with a square groove (401) adapted to accommodate and fix the pressure sensing element (70) and the circuit board (50); the pressure sensing element (70) is fixed on a bottom of the circuit board (50) and is electrically connected to the circuit board (50), and a pressure transmission channel is further provided within the housing (20) for guiding a medium from a bottom of the housing (20) to a surface of the pressure sensing element (70);
the pressure transmission channel comprises a gap portion (201) and an internal portion; the gap portion (201) is formed by the protective sleeve (30) and the housing (20), the internal portion is a specially shaped channel (202) formed on the support base (40); wherein a circular pressure groove (402) is provided within the square groove (401), a circular sealing ring (42) is provided along a sidewall of the circular pressure groove (402), and the circular pressure groove (402) cooperates with the pressure sensing element (70) to form a pressure cavity;
wherein in an axial direction, the pressure cavity is eccentrically designed relative to the housing (20), the pressure cavity deviates along a length direction of the square groove (401) to form a medium introduction region at a deviated portion, and the specially shaped channel (202) is provided in the medium introduction region and communicates with the pressure cavity and the gap portion (201) respectively in the axial direction;
the specially shaped channel (202) is a sector-shaped channel, wherein a side of the specially shaped channel (202) proximate to a central axis is planar, and the planar side is proximate to the protective sleeve (30) in the axial direction; a side of the specially shaped channel (202) proximate to the circular sealing ring (42) is curved, the planar side and the curved side transitioning via a circular arc; the planar side and the curved side of the specially shaped channel 202 are respectively close to two extreme positions of the deviated portion;
the housing (20) is provided with a housing cavity (203), a bottom wall of the housing cavity (203) is provided with a profiled anti-rotation groove (204), a top end of the protective sleeve (30) is provided with an anti-rotation stretched plate (31) that cooperates with the profiled anti-rotation groove (204), and the support base (40) is symmetrically provided with crimping protrusions (43) on both sides of the lower side waist (41), such that when the crimping protrusions (43) are crimped onto a bottom of the anti-rotation stretched plate (31), they undergo crimping deformation.

2. The temperature-pressure sensor for new energy vehicle according to claim 1, **characterized in that** a bottom opening of the specially shaped channel (202) has a flared structure that is smaller at a top and larger at a bottom.

3. The temperature-pressure sensor for new energy vehicle according to claim 1, **characterized in that** the profiled anti-rotation groove (204) is a square groove, and corners of the square groove are all rounded.

4. The temperature-pressure sensor for new energy vehicle according to claim 1, **characterized in that** the pressure sensing element (70) is a ceramic capacitor, a signal processing chip on the circuit board (50) excites the ceramic capacitor with a square wave signal at a frequency of 38.4 to 76.8 kHz to obtain a capacitance value C of the pressure sensing element (70); and
the signal processing chip on the circuit board (50) processes the capacitance value C sequentially according to the following steps:
S10, inputting capacitance zero adjustment;
S20, C/V conversion, converting the zero-adjusted input capacitance into an analog voltage signal;
S30, ADC conversion, calibrating consistency of data format and units during the calculation;
S40, MCU processing, applying N different standard voltages to the sensor at M temperature points respectively, collecting capacitance values C under the N different standard pressures and storing the capacitance values C in an MCU register by the circuit board (50), further fitting and processing information stored in the register with a target of achieving a V-P linear relationship required by a vehicle, ultimately achieving a consistent V-P linear output, wherein M is 2 or 3, and 2≤N≤4;
S50, DAC calibration, eliminating errors of an analog output module.

5. The temperature-pressure sensor for new energy vehicle according to claim 4, **characterized in that** the ceramic capacitor sequentially comprises a square base (71), a base electrode (72), a diaphragm electrode (74), and a diaphragm (75), wherein the square base (71) and the base electrode (72) are sintered to form a first sub-assembly, the diaphragm electrode (74) and the diaphragm (75) are sintered to form a second sub-assembly, the first sub-assembly and the second sub-assembly are sintered and connected via a patterned glass adhesive (73), and glass rods are filled in the glass adhesive (73), a diameter of the glass rods is the distance between the first sub-assembly and the second sub-assembly.

6. The temperature-pressure sensor for new energy vehicle according to claim 1, **characterized in that** the temperature-pressure sensor further comprises a mounting seat (80); wherein the housing (20) is provided with a housing waist (21) corresponding to the lower side waist (41), the housing waist (21) is threadedly connected to the mounting seat (80), a bottom of the mounting seat (80) is provided with a medium flow channel (801) and a detection flow channel (802) which are vertically communicated, the protective sleeve (30) is located within the detection flow channel (802), a top end of the housing waist (21) is provided with a sealing groove on an outer circumference, an external sealing ring (22) is provided in the sealing groove, and the external sealing ring (22) protrudes from the sealing groove.

7. The temperature-pressure sensor for new energy vehicle according to claim 1, **characterized in that** the support base (40) is a plastic base, the protective sleeve (30) is a stainless steel sleeve, a lower interior portion of the protective sleeve (30) is filled with a thermally conductive medium (32), and the temperature sensing probe (60) is located within the thermally conductive medium (32).

8. The temperature-pressure sensor for new energy vehicle according to claim 1, **characterized in that** the temperature sensing probe (60) is a thermistor, and the temperature sensing probe (60) forms a resistor head via epoxy encapsulation or glass encapsulation.
